**Europäisches Patentamt**

**European Patent Office**

**Office européen des brevets**

(11) Veröffentlichungsnummer: **0 098 635**

**B1**

(12) **EUROPÄISCHE PATENTSCHRIFT**

(45) Veröffentlichungstag der Patentschrift:
**13.08.86**

(21) Anmeldenummer: **83200874.2**

(22) Anmeldetag: **15.06.83**

(51) Int. Cl.⁴: **A 01 D 78/10**

(54) **Vorrichtung zum Bearbeiten am Boden liegenden Ernteguts.**

(30) Priorität: **09.07.82 NL 8202785**

(43) Veröffentlichungstag der Anmeldung:
**18.01.84 Patentblatt 84/3**

(45) Bekanntmachung des Hinweises auf die Patenterteilung:
**13.08.86 Patentblatt 86/33**

(84) Benannte Vertragsstaaten:
**AT BE CH DE FR GB LI NL**

(56) Entgegenhaltungen:
**DE-A-2 432 827**
**FR-A-1 367 040**
**FR-A-2 192 755**
**FR-A-2 299 799**
**FR-A-2 326 858**
**FR-A-2 435 190**
**FR-A-2 438 414**
**GB-A-1 574 760**

(73) Patentinhaber: **P.J. Zweegers en Zonen
Landbouwmachinefabriek B.V., Nuenenseweg
165, NL- 5667 KP Geldrop (NL)**

(72) Erfinder: **Quataert, Petrus Maria, Berg 73, NL- 5671
CB Nuenen (NL)**

(74) Vertreter: **Noz, Franciscus Xaverius, Ir., Boschdijk
155, NL- 5612 HB Eindhoven (NL)**

LIBER, STOCKHOLM 1986

## Beschreibung

Die Erfindung betrifft eine Vorrichtung zum Bearbeiten am Boden liegenden Ernteguts mit einem Gestell und zwei mit Zinken versehenen Rechorganen, die um aufwärts gerichtete Drehachsen drehbar und durch mit einem Tragbalken des Gestells verbundene Zahnradgehäuse antreibbar sind, von denen mindestens eines nahe dem Ende des Tragbalkens, angebracht und ausser dem um eine wenigstens nahezu vertikale Schwenkachse in Bezug auf den Tragbalken verschwenkbar ist, wobei ausserdem Mittel vorgesehen sind durch die die Drehrichtung mindestens eines der angetriebenen Rechorgane umgekehrt werden kann und durch die Vorrichtung zwischen einer ersten Arbeitsstellung in der beide Rechorgane quer zur beabsichtigten Fahrtrichtung im Betrieb nebeneinander liegen und derart antreibbar sind, dass die Zinken sich auf den einander zugewandten Seiten der Rechorgane, in der Fahrtrichtung gesehen, nach hinten bewegen, und einer zweiten Arbeitsstellung umstellbar ist, in der die Rechorgane, in der Fahrtrichtung gesehen, schräg hintereinander liegen und in der gleichen Richtung antreibbar sind.

Eine solche Vorrichtung ist aus der Niederländischen Patentanmeldung 7 512 195 bekannt. Bei dieser bekannten Vorrichtung sind die beiden Zahnradgehäuse an den Enden des Tragbalkens um Schwenkachsen verschwenkbar angeordnet und durch Kupplungsstangen mit einem in Bezug auf den Tragbalken ebenfalls verschwenkbaren Zugarm verbunden.

Zum Umstellen der Vorrichtung von einer Arbeitsstellung in die andere wird der Tragbalken in Bezug auf den Zugarm verschwenkt, wobei auch die Zahnradgehäuse in Bezug auf den Tragbalken mittels der Kupplungsstangen verschwenkt werden. An sich wirkt diese Vorrichtung zufriedenstellend, aber es kann ein Nachteil sein, dass die Vorrichtung eine grosse Anzahl untereinander verschwenkbarer Teile enthält, wodurch der Aufbau der Vorrichtung kompliziert ist.

Die Erfindung bezweckt eine Vorrichtung vorerwähnter Art zu schaffen, deren Aufbau einfacher ist.

Nach der Erfindung ist dies dadurch erzielbar, dass an dem von einem am anderen Ende des Tragbalkens fest angeordneten Zahnradgehäuse abgewandten Ende des im normalen Betrieb schräg zur Fahrtrichtung verlaufenden Tragbalkens ein Ende eines Arms mittels einer wenigstens nahezu vertikalen Schwenkachse verstellbar angelenkt ist, während am von der Schwenkachse abgewandten Ende des Arms das andere Zahnradgehäuse mittels der zuerst genannten, wenigstens nahezu vertikalen Schwenkachse verschwenkbar gekuppelt ist, mit der ein Ende einer Kupplungsstange gekuppelt ist, die zum gleichzeitigen Verriegeln des Arms gegen Verdrehung um seine eigene Schwenkachse und des betreffenden Zahnradgehäuses gegen Verdrehung um seine Schwenkachse in den beiden Arbeitsstellungen mit ihrem anderen Ende in verschiedenen Stellungen mit dem Tragbalken gekuppelt werden kann.

Bei Anwendung der Konstruktion nach der Erfindung kann eine Vorrichtung einfachen Aufbaus erhalten werden, wobei nur der Arm und das mit dem freien Ende des Arms gekuppelte Zahnradgehäuse um die betreffende, wenigstens nahezu vertikale Schwenkachse zum Umstellen der Vorrichtung aus einer Arbeitsstellung in die andere verschwenkt zu werden braucht.

Es wird bemerkt, dass aus FR-A-1.367.040 eine Vorrichtung zum Beatbeiten am Boden liegenden Ernteguts bekannt ist mit drei Rechorganen, wobei die beiden äussersten Rechorgane je mittels einem Zahnradgehäuse am Ende eines Arms befestigt sind, während der Arm mit seinem anderen Ende schwenkbar und einstellbar an einem das mittlere Rechorgan unterstützenden Zahnradgehäuse gekuppelt ist. Dabei sind die die äussersten Rechorgane tragenden Zahnradgehäuse fest an den diesbezüglichen Armen befestigt. Dadurch können die Rechorgane nicht in jeder Lage der Arme eingestellt werden, derart, dass in Fahrtrichtung gesehen, im Betrieb die Zinken der Rechorgane ihre niedrigste Lage etwa an der Vorderseite der Vorrichtung einnehmen.

Nach einem weiteren Merkmal der Erfindung sind der Arm und das vom Arm getragene Zahnradgehäuse mittels der Kupplungsstange in mindestens zwei Stellungen verriegelbar, in denen die Rechorgane in einer quer zur beabsichtigten Fahrtrichtung verlaufenden Richtung gesehen, wenigstens nahezu hintereinander und in verschiedenen Abständen voneinander liegen. Bei Verwendung dieser Massnahme lässt sich die Vorrichtung ausserdem in der Arbeitsstellung, in der die beiden Rechräder das Erntegut in Richtung aufeinander hin versetzen, mit verschiedenen Abständen zwischen den Drehachsen der Rechorgane benutzen, so dass in dieser Arbeitsstellung die Vorrichtung mit verschiedenen Arbeitsbreiten und mit verschiedenen Schwadenbreiten verwendbar ist.

Die Erfindung wird nachstehend an Hand einer in beiliegender Zeichnung schematisch dargestellten Ausführungsform einer Vorrichtung nach der Erfindung näher erläutert. Es zeigen

Fig. 1 eine Draufsicht der Vorrichtung nach der Erfindung in einer ersten Arbeitsstellung,

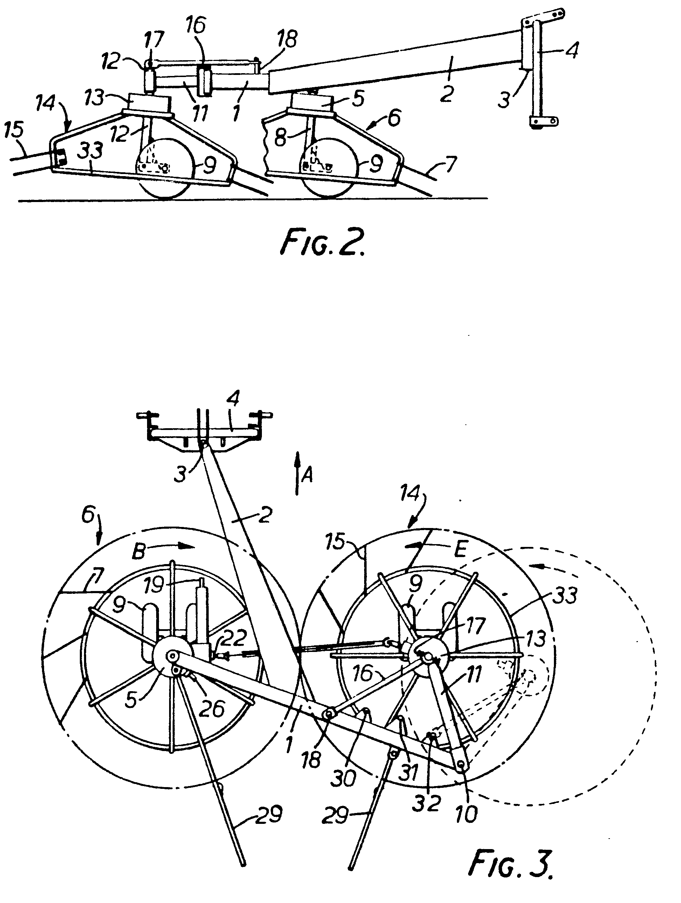

Fig. 2 eine Seitenansicht der Vorrichtung nach Fig. 1,

Fig. 3 eine Draufsicht der erfindungsgemässen Vorrichtung in einer zweiten Arbeitsstellung,

Fig. 4 einen Schnitt durch ein Zahnradgehäuse, das in der Vorrichtung nach der Erfindung verwendet wird,

Fig. 5 einen Teil eines Schnitts längs der Linie V-V in Fig. 4,

Fig. 6 einen Schnitt durch eine Ausführungsform einer Zinkenbefestigung an einem Rechorgan,

Fig. 7 eine Ansicht in Richtung des Pfeiles VII in Fig. 6, wobei übersichtlichkeitshalber bestimmte in Fig. 6 dargestellte Einzelteile weggelassen sind.

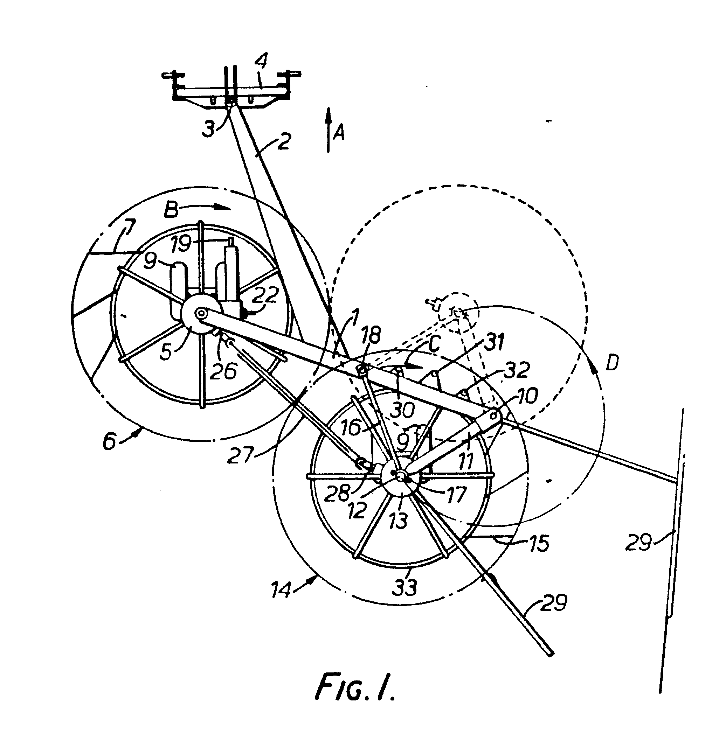

Die in Fig. 1 dargestellte Vorrichtung enthält einen Tragbalken 1, der sich im Betrieb schräg zur beabsichtigten Fahrtrichtung nach Pfeil A erstreckt. Zwischen den Enden des Tragbalkens 1 ist an diesem Tragbalken ein ebenfalls schräg zur Fahrtrichtung nach Pfeil A verlaufender Zugarm 2 fest angebracht. Am Vorderende des Zugarms 2 ist mittels einer vertikalen Schwenkwelle 3 ein an sich bekanntes Ankupplungsorgan 4 angelenkt. Mittels dieses Ankupplungsorgans 4 kann die Vorrichtung mit der Dreipunkt-Hebevorrichtung eines Schleppers gekuppelt werden. An einem Ende des Tragbalkens 1 ist ein Zahnradgehäuse 5 fest angebracht. Unter dem Zahnradgehäuse 5 ist ein Rechorgan 6 angeordnet, das mit gleichmässig über den Umfang des Rechorgans verteilten, von dem Aussenumfang des Rechorgans ab nach aussen vorstehenden Zinken 7 versehen ist. Am Zahnradgehäuse ist ferner ein nach unten gerichteter Arm 8 befestigt, an dem zwei unter dem Rechorgan 6 liegende, die Vorrichtung abstützende Laufräder 9 angebracht sind.

An dem vom Zahnradgehäuse 5 abgewandten Ende ist mittels einer im normalen Betrieb wenigstens nahezu vertikalen Schwenkachse 10 ein Ende eines Arms 11 angelenkt. An dem von der Schwenkachse 10 abgewandten Ende des Arms 11 ist mit Hilfe einer zur Schwenkachse 10 parallelen Schwenkachse 12 ein Zahnradgehäuse 13 angelenkt. Durch eine in diesem Zahnradgehäuse 13 untergebrachte Zahnradübersetzung ist ein unter dem Zahnradgehäuse 13 angeordnetes Rechorgan 14 antreibbar, das in gleicher Weise wie das Rechorgan 6 mit federnden Zinken 15 versehen ist. Wie üblich, ist die Anordnung der Drehachsen der Rechorgane 6 und 14 derart, dass diese Drehachsen sich im Betrieb der Vorrichtung in wenigstens nahezu parallel zur beabsichtigten Fahrtrichtung nach dem Pfeil A verlaufenden Ebenen derart erstrecken, dass die freien Enden der Zinken 7 und 15 sich in schräg nach vorne geneigten Ebenen bewegen.

Auch unter dem Rechorgan 14 sind das Gestell abstützende Laufräder 9 mittels eines geknickten Endes 12' der Achse 12 angebracht.

Fig. 1 zeigt ferner, dass der Arm 11 vor Verschwenkung um die Schwenkachse 10 mittels einer Kupplungsstange 16 gesichert ist. Ein Ende dieser Kupplungsstange 16 ist mittels eines zur Achse 12 senkrechten Gelenkstifts 17 an dem über den Arm 11 herausragenden Ende der Achse 12 angelenkt. Das von der Achse 12 abgewandte Ende der Kupplungsstange 16 hat ein Loch, in das das obere Ende eines am Tragbalken 1 befestigten Stifts 18 geschoben ist. Es wird einleuchten, dass in dieser Weise mittels der Kupplungsstange 16 gleichzeitig der Arm 11 vor Verdrehung um die Schwenkachse 10 und das Zahnradgehäuse 13 vor Verdrehung um die Schwenkachse 12 gesichert sind. Die Ausführung ist derart, dass die Längsachse der Kupplungsstange 16 einen Winkel von 45° mit der Mittellinie des Stifts 17 einschliesst.

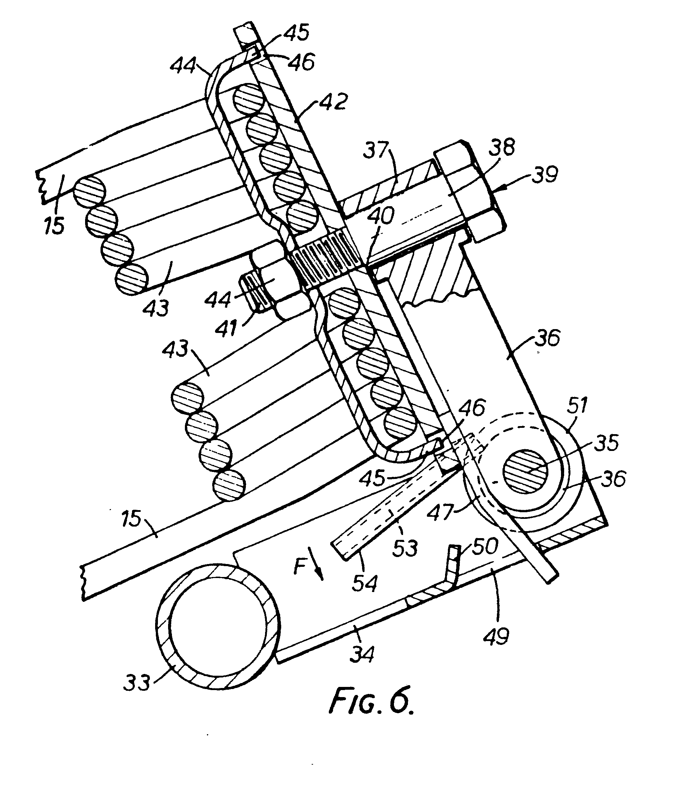

Fig. 4 zeigt insbesondere, dass im Zahnradgehäuse 5 eine Welle 19 gelagert ist, deren aus dem Zahnradgehäuse 5 herausragendes Vorderende (Fig. 1) mit Hilfe einer Zwischenwelle in an sich bekannter Weise mit der Zapfwelle eines Schleppers oder dgl. kuppelbar ist. Das im Innern des Zahnradgehäuses 5 liegende Ende der Welle 19 ist mit einem Kegelzahnrad 20 versehen, das mit einem Kegelzahnrad 21 in Eingriff ist, das an einer im Zahnradgehäuse 5 gelagerten, die Welle 19 senkrecht kreuzenden Welle 22 befestigt ist. Ein Ende der Welle 22 ragt aus dem Zahnradgehäuse 5 heraus während am anderen Ende der Welle 22 ein Kegelzahnrad 23 befestigt ist, dessen Zähne mit denen eines im Zahnradgehäuse 5 gelagerten Kegelzahnrads 24 in Eingriff stehen, das fest an dem unter dem Zahnradgehäuse 5 angeordneten Rechorgan 6 angebracht ist.

Die Zähne des Kegelzahnrads 23 sind, wie dies aus Fig. 4 ersichtlich ist, ferner in Eingriff mit den Zähnen eines Kegelzahnrads 25, das an einer ebenfalls im Zahnradgehäuse 5 gelagerten Welle 26 befestigt ist, von der ein Ende gleichfalls aus dem Zahnradgehäuse 5 herausragt. Dabei ist die Welle 26 mit dem von der Welle 25 abgestützten Kegelzahnrad 23 (siehe insbesondere Fig. 5) derart angeordnet, dass dieses Kegelzahnrad 25 sich frei von dem Zahnrad 24 drehen kann. In der in Fig. 1 dargestellten Arbeitsstellung der Vorrichtung ist das aus dem Zahnradgehäuse 5 herausragende Ende der Welle 26 mittels einer teleskopischen Hilfswelle 27 mit einem aus dem Zahnradgehäuse 13 herausragenden Ende einer in diesem Zahnradgehäuse gelagerten Welle 28 gekuppelt. An dem im Zahnradgehäuse 13 liegenden Ende der Welle 28 ist ein dem Kegelzahnrad 25 entsprechendes Kegelzahnrad befestigt, dessen Zähne mit den Zähnen eines dem Kegelzahnrad 24 entsprechenden Zahnrads in Eingriff stehen, das fest am Rechorgan 14 angebracht ist.

Die Ausführung ist derart, dass bei Fortbewegung der Vorrichtung im Betrieb in Richtung des Pfeils A und beim Antrieb der Rechorgane 6 und 14 die Rechorgane nach Fig. 1 in der Uhrzeigerrichtung d.h. in Richtung des Pfeils B bzw. C drehen. Es wird einleuchten, dass dabei das in bezug auf die Fahrtrichtung vordere Rechorgan 6 las am Boden liegende Erntegut nach rechts bis vor das Rechorgan 14 versetzt, während das in bezug auf die Fahrtrichtung schräg hinter dem Bechorgan 6 vorhandene Rechorgan 14 alles in den Bereich dieses Rechorgans 14 gelangende Erntegut ebenfalls gemäss Fig. 1 nach rechts versetzen wird. Wie dies schematisch in Fig. 1 angedeutet ist, kann die Vorrichtung noch mit einstellbaren Führungsorganen oder Schwadbrettern 29 versehen sein, mittels deren das versetzte Erntegut in der erwünschten Weise in Form eines Schwadens hingelegt werden kann.

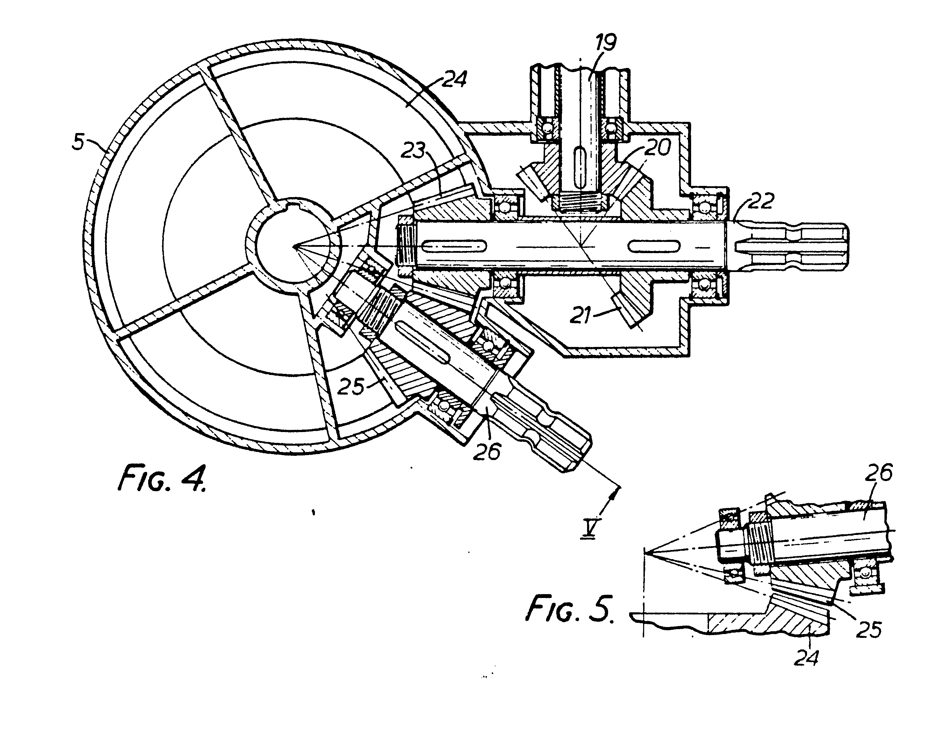

Nach Lösung der Kupplungsstange 16 von dem am Tragbalken 1 befestigten Stift 18 kann der Arm 11 mit dem von diesem Arm abgestützten Rechorgan 14 in Richtung des Pfeils D aus der in Fig. 1 dargestellten Stellung in die in Fig. 1 mit gestrichelten Linien und in Fig. 3 mit vollen Linien angedeutete Stellung verschwenkt werden. Für diese Verschwenkung wird die Hilfswelle 27 von dem aus dem Zahnradgehäuse 5 herausragenden Ende der Welle 26 losgekuppelt und nach der Verschwenkung mit dem aus dem Zahnradgehäuse 5 herausragenden Ende der Welle 22 gekuppelt. Um den Arm 11 vor Verschwenkung um die Schwenkachse 10 und das Zahnradgehäuse 13 vor Verschwenkung um die Schwenkachse 12 zu sichern, braucht das freie Ende der Kupplungsstange 16 nur über den Stift 18 geschoben zu werden, was einfach dadurch bewerkstelligt werden kann, dass die Kupplungsstange 16 aus der in Fig. 1 dargestellten Stellung über 180° um den Stift 17 geschwenkt wird. Die Anordnung ist derart, dass, wie dies aus Fig. 3 hervorgeht, die von den freien Enden der Zinken 7 bzw. 15 beschriebenen Bahnen beider Rechorgane 6 und 14 sich wenigstens nahezu berühren. Durch Umstellung der Hilfswelle 27 wird das Rechorgan 14 im Betrieb in Richtung des Pfeils E angetrieben, die der Drehrichtung des Rechorgans in der in Fig. 1 dargestellten Arbeitsstellung entgegengesetzt ist. Die Lage des Tragbalkens 1 und des damit fest verbundenen Zugarms 2 hat sich in beiden Arbeitsstellungen wenigstens nahezu nicht geändert in bezug auf die beabsichtigte Fahrtrichtung nach Pfeil A und die Längsachse des Tragbalkens 1 schliesst dabei einen Winkel von etwa 70° mit der beabsichtigten Fahrtrichtung ein.

In beiden Arbeitsstellungen liegt, in der Fahrtrichtung gesehen, die Drehachse des verstellbaren Rechrads der Drehachse des anderen Rechrads näher als das Ende des Tragbalkens 1, um das das verstellbare Rechrad verschwenkbar ist, während in beiden Arbeitsstellungen die Längsachsen des Arms 11 einen Winkel von etwa 50° mit der Längsachse des Tragbalkens 1 einschliesst.

Es wird einleuchten, dass in der in Fig. 3 dargestellten Arbeitsstellung im Betrieb die beiden Rechorgane das Erntegut in Richtung aufeinander hin versetzen und zwischen sich rückwärts bewegen, wodurch das Erntegut nach hinten abgeführt wird. Gegebenenfalls kann die Vorrichtung, wie dies auch schematisch in Fig. 3 angedeutet ist, mit Schwadbrettern 29 versehen sein, die das Erntegut in Form eines Schwadens der erwünschten Breite hinlegen.

In den Fig. 1 und 3 ist ferner angegeben, dass am Tragbalken 1 nicht nur der aufwärts verlaufende Stift 18 sondern auch weitere aufwärts verlaufende Stifte 30 bis 32 derart befestigt sind, dass die Stifte 30 bis 32 um verschiedene Abstände von der Längsachse des Tragbalkens 1 entfernt sind. Das Ende der Kupplungsstange 16 kann nach Wahl mit einem dieser Stifte 30 bis 32 gekuppelt werden, was schematisch mit gestrichelten Linien für den Arm 11 und das Rechorgan 14 in einer Stellung angedeutet ist, in der das Ende der Kupplungsstange 16 mit dem Stift 32 gekuppelt ist (Fig. 3). Die Lage der Stifte 30 bis 32 ist derart gewählt, dass wenn das Ende der Kupplungsstange 16 über einen Stift geschoben ist zur Verriegelung des Arms 11 um die Schwenkachse 10 und des Zahnradgehäuses 13 um die Schwenkachse 12, die Drehachse des vom Zahnradgehäuse 12 abgestützen Rechorgans 14 stets in einer zur Fahrtrichtung nach Pfeil A parallelen Ebene liegt, wobei sich die Enden der Zinken in einer nach vorne geneigten Ebene bewegen.

Es wird einleuchten, dass der Abstand zwischen den in Wirkverbindung miteinander stehenden Rechorganen 9 und 14 in der Stellung, in der sie quer zur beabsichtigten Fahrtrichtung nach dem Pfeil A wenigstens nahezu hintereinander liegen und das Erntegut zwischen sich rückwärts versetzen, in einfacher Weise geändert werden kann. In dieser Weise kann die Vorrichtung eine grosse Arbeitsbreite haben, durch die ein verhältnismässig breiter Schwaden gebildet werden kann, der sich besonders gut zur Verarbeitung mit Hilfe von Vorrichtungen zur Bildung von sogenannten Wickelballen oder zur Aufnahme mittels Ladewagen eignet.

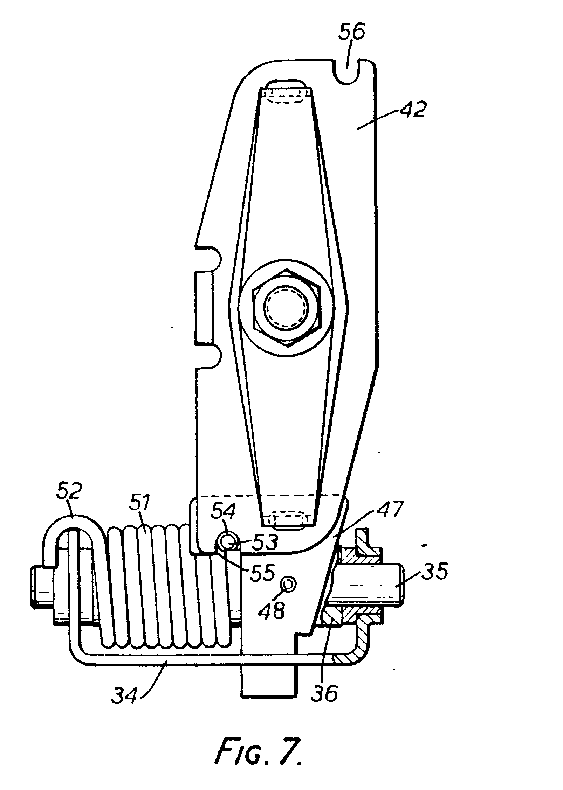

Die federnden Zinken 15 werden vorzugsweise am verstellbaren Rechorgan 14 durch Anwendung der in den Fig. 6 und 7 dargestellten Konstruktion angebracht.

Aus Fig. 6 geht hervor, dass zum Abstützen der federnden Zinken 15 an der ununterbrochenen Felge 33 des Rechorgans 14 in gleichen Abständen voneinander, von der Folge ab radial nach innen vorstehende Stützen 34 U-förmigen Querschnitts angebracht sind. In den Schenkeln dieser Stützen sind die Drehachse des Rechrads senkrecht kreuzende Stifte 35 gelagert. Um jeden der Stifte 35 ist eine Buchse 36 verschwenkbar. Am oberen Ende des Trägers ist eine Nabe 37 vorgesehen, in der ein Teil 38 eines den Stift 35 senkrecht kreuzenden Bolzens 39 liegt. Die Länge dieses Teils 38 ist etwas grösser als die Länge der Nabe 37, so dass die am Übergang zwischen dem Teil 38 und dem dünneren, mit Gewinde versehenen Teil 41 des Bolzens gebildete Schulter 40 ausserhalb der Nabe 37 liegt. Auf der Schulter 40 ruht eine auf den Gewindeteil 41 des Bolzens 39 geschraubte Platte 42. An der Platte 42 sind die Windungen 43 der Zinken 15 mittels einer Verschlussplatte 44 festgesetzt, die ebenfalls auf den Gewindeteil 41 des Bolzens geschoben und an diesem mittels einer auf den Bolzen geschraubten Mutter 44' gehaltert wird. Abgebogene Enden 45 der Verschlussplatte liegen in dazu in der Platte 42 vorgesehenen Ausnehmungen 46.

Aus den Figuren geht ferner hervor, dass das untere Ende der Stützplatte 42 auf einer Platte 47 ruht, die mittels eines Stifts 48 an der Stütze 36 festgesetzt ist. Ein unteres Ende der Platte 47 liegt in einer im Steg des Bügels 34 vorgesehenen Ausnehmung 49, die an dem der Felge 33 zugewandten Ende durch eine aufwärts abgebogene Zunge 50 begrenzt wird.

Die Buchse 36 ist ferner über einen Teil ihres Umfangs von einer Schraubfeder 51 umgeben, von der ein Ende 52 um einen Schenkel der U-förmigen Stütze 34 gehakt ist, um eine Verdrehung der Schraubfeder 51 um den Stift 35 zu verhüten. Das andere Ende 53 der Schraubfeder verläuft nahezu radial zum Aussenumfang der den Stift 35 umgebenden Buchse 36 und wird von einer Hülse 54 umgeben. Die Hülse 54 erstreckt sich in einer in der Platte 47 vorgesehenen, unten offenen Ausnehmung und in einer ebenfalls unten offenen Ausnehmung 55 in einem am oberen Ende der Platte 47 liegenden unteren Ende der Platte 42. Es wird einleuchten, dass in dieser Weise die Platte 42 vor Verdrehung um den Bolzen 39 gesichert ist mittels des durch die Ausnehmung 55 verlaufenden Teils des Endes 53 der Feder, das von der Hülse 54 umgeben wird.

Es sei bemerkt, dass die Fig.6 und 7 die Zinken und die diese Zinken abstützenden Teile in der Betriebsstellung darstellen, in der die Zinken unter dem Einfluss der auf die Zinken und die diese Zinken abstützenden Teile einwirkenden Zentrifugalkraft, in Fig. 6 gesehen, der Uhrzeigerrichtung entgegen verschwenkt sind um die Achsen 35 bis in die Stellung, in der eine weitere Verschwenkung durch die Platte 47 verhütet wird, deren unteres Ende mit einem als Anschlag dienenden Begrenzungsrand der Ausnehmung 49 in Berührung gekommen ist. Aus Fig. 6 ist ersichtlich, dass die Anordnung derart ist, dass die Zinken 15 noch frei von der Felge 33 bleiben, so dass kein unerwünschter Verschleiss der Zinken 15 infolge der Berührung zwischen den Zinken 15 und der Felge 33 auftreten wird. Beim stillstehenden Rechorgan sind die Zinken durch die Wirkung der Kraft der Schraubfeder 51 nach Fig. 6 aus der in Fig. 6 dargestellten Stellung in der Uhrzeigerrichtung um den Stift 35 bis in die Stellung verschwenkt, in der das untere Ende der Platte 47 an der als Anschlag wirksamen, aufwärts abgebogenen Zunge 50 zur Anlage gekommen ist.

In dieser Stellung ist auch das von der Hülse 54 umgebene Ende der Schraubfeder gut zugänglich und ist die Spannung der Schraub-Feder nicht zu gross, um einer leichten Herunterschwenkung dieses Endes der Feder von Hand entgegenzuwirken.

Indem dieses Ende durch Ausübung einer nach unten gerichteten Kraft in Richtung des Pfeils F heruntergeschwenkt wird kann das in der Ausnehmung 55 liegende, von der Hülse 54 umgebene Ende der Feder aus der Ausnehmung 55 entfernt werden, worauf die Platte 42 mit den damit verbundenen Zinken über 180° um die Mittellinie des Bolzens 39 verdreht werden kann.

Wenn darauf das von der Hülse 54 umgebene Ende 53 der Feder gelöst wird, schnappt dieses Ende in eine der Ausnshmung 55 entsprechende Ausnehmung 56 in dem gegenüber der Ausnehmung 55 liegenden Ende der Stützplatte 42, so dass die Stützplatte 42 mit den von ihr abgestützten Zinken 7 wieder vor Verdrehung um den Bolzen 39 gesichert ist.

Dank der vorstehend beschriebenen, einfachen Umstellung der Zinken ist es möglich, in den beiden beschriebenen Arbeitsstellungen der Vorrichtung die Zinken stets derart anzuordnen, dass sie sich von ihrer Befestigungsstelle am Rechorgan, in der Drehrichtung gesehen, schräg nach hinten erstrecken, was aus den Fig. 1 und 3 hervorgeht.

**Patentansprüche**

1. Vorrichtung zum Bearbeiten am Boden liegenden Ernteguts mit einem Gestell und zwei mit Zinken (7, 15) versehenen Rechorganen (6, 14), die um aufwärts gerichtete Drehachsen drehbar und durch mit einem Tragbalken (1) des Gestells verbundene Zahnradgehäuse (5, 13) antreibbar sind, von denen mindestens ein nahe einem Ende des Tragbalkens (1) angebracht und ausserdem um eine wenigstens nahezu vertikale Schwenkachse (12) in Bezug auf den Tragbalken (1) verschwenkbar ist, wobei ausserdem Mittel vorgesehen sind, durch die die Drehrichtung mindestens eines der angetriebenen Rechorgane umgekehrt werden kann und durch die die Vorrichtung zwischen einer ersten Arbeitsstellung, in der beide Rechorgane quer zur beabsichtigten Fahrtrichtung im Betrieb nebeneinander liegen und derart antreibbar sind, dass die Zinken (7, 15) sich auf den einander zugewandten Seiten der Rechorgane (6, 14), in der Fahrtrichtung gesehen, nach hinten bewegen, und einer zweiten Arbeitsstellung umstellbar ist, in der die Rechorgane, in der Fahrtrichtung gesehen, schräg hintereinander liegen und in der gleichen Richtung antreibbar sind, dadurch gekennzeiohnet, dass an dem von einem am anderen Ende des Tragbalkens (1) fest angeordneten Zahnradgehäuse (5) abgewandten Ende des im normalen Betrieb schräg zur Fahrtrichtung verlaufenden Tragbalkens (1) ein Ende eines Arms (11) mittels einer wenigstens nahezu vertikalen Schwenkachse (10) verstellbar angelenkt ist, während am von der Schwenkachse (10) abgewandten Ende des Arms (11) das andere Zahnradgehäuse (13) mittels der zuerst genannten, wenigetens nahezu vertikalen Schwenkachse (12) verschwenkbar gekuppelt ist, mit der ein Ende einer Kupplungsstange (16) gekuppelt ist, die zum gleichzeitigen Verriegeln des Arms gegen Verdrehung um seine eigene Schwenkachse (10) und des betreffenden Zahnradgehäuses (13) gegen Verdrehung um seine Sohwenkachse (12) in den beiden Arbeitsstellungen mit ihrem anderen Ende in verschiedenen Stellungen mit dem Tragbalken (1) gekuppelt werden kann.

2. Vorrichtung nach Anspruch 1, dadurch gekennzeichnet, dass der Arm (11) und das vom Arm (11) getragene Zahnradgehäuse (13) mittels der Kupplungsstange (16) in mindestens zwei Stellungen verriegelbar sind, in denen die Rechorgane (6, 14), in einer quer zur beabsichtigten Fahrtrichtung verlaufenden Richtung gesehen, wenigstens nahezu hintereinander und in verschiedenen Abständen voneinander liegen.

3. Vorrichtung nach Anspruch 1 oder 2, dadurch gekennzeichnet, dass die Kupplungsstange (16) mittels einer horizontalen Schwenkachse (17) mit einem über dem Arm (11) herausragenden Ende der Schwenkachse (12) gekuppelt ist.

4. Vorrichtung nach Anspruch 3, dadurch gekennzeichnet, dass die Schwenkachse (12) einen Winkel von etwa 45° mit der Längsachse der Kupplungsstange (16) einschliesst.

5. Vorrichtung nach einem der vorhergehenden Ansprüche, dadurch gekennzeichnet, dass in der Fahrtrichtung (A) der Vorrichtung im Betrieb gesehen, das vom fest am Tragbalken (1) angebrachten Zahnradgehäuse (5) abgewandte Ende des Tragbalkens (1) in zwei verschiedenen Arbeitsstellungen in einem grösseren Abstand vom fest am Tragbalkens (1) in den unterschiedlichen (5) liegt als das Zahnradgehäuse (13) des verstellbaren Rechorgans (14).

6. Vorrichtung nach einem der vorhergehenden Ansprüche, dadurch gekennzeichnet, dass die Mittellinie des Tragbalkens (1) in den unterschiedlichen Arbeitsstellungen einen Winkel von etwa 70° mit der beabsichtigten Fahrtrichtung (A) im normalen Betrieb einschliesst.

7. Vorrichtung nach einem der vorhergehenden Ansprüche, dadurch gekennzeichnet, dass der Arm (11) in zwei Arbeitsstellungen einen Winkel von wenigstens nahezu 50° mit der Längsachse des Tragbalkens (1) einschliesst.

8. Vorrichtung nach einem der vorhergehenden Ansprüche, dadurch gekennzeichnet, dass die Zinken (15) des verstellbaren Rechorgans (14) zwischen zwei Arbeitsstellungen durch Verschwenkung über 180° um eine die Drehachse (12) des Rechorgans (14) wenigstens nahezu senkrecht schneidende oder kreuzende Achse (38) einstellbar sind.

9. Vorrichtung nach Anspruch 8, wobei die Zinken (15) an Trägern (36) befestigt sind, die in Bezug auf das Rechorgan (14) unter der Wirkung der Zentrifugalkraft um Schwenkachsen (35) entgegen der Wirkung einer die Schwenkachsen umgebenden Schraubfeder (51) drehbar sind, dadurch gekennzeichnet, dass die Zinken von in Bezug auf die Träger (36) um die Achsen (38) drehbaren Stützen (42) abgestützt werden, die Ausnehmungen (55, 56) zur Aufnahme in Bezug auf die Schwenkachsen (35) etwa radial verlaufenden Enden (53) der Schraubfedern (51) aufweisen.

10. Vorrichtung nach Anspruch 9, dadurch gekennzeichnet, dass die die Zinken (15) tragenden Träger (36) mit fest am Rechorgan (14) angebrachten Anschlägen (149, 501) zum Begrenzen der Schwenkbewegungen der Träger (36) in Wirkverbindung stehen.

11. Vorrichtung nach Anspruch 10, dadurch gekennzeichnet, dass ein Träger (36) mit einem vorstehenden Teil (47) versehen ist, der sich durch einen am Rechorgan befestigten Tragteil (34) für die Schwenkachse (35) erstreckt.

12. Vorrichtung nach einem der vorhergehenden Ansprüche, dadurch gekennzeichnet, dass das fest am Tragbalken (1) angebrachte Zahnradgehäuse (5) mit einer mittels einer Hilfswelle mit der Zapfwelle eines Schleppers oder dergleichen zu kuppelnden Eingangswelle (19) versehen ist, die durch eine Zannradübersetzung (20, 21) mit einer Hilfswelle (22) gekuppelt ist, die an einem Ende aus dem Zahnradgehäuse herausragt und am anderen Ende mit einem Kegelzahnrad (23) versehen ist, das mit einem unter diesem liegenden, am betreffenden Rechorgan (6) befestigten Kegelzahnrad (24) in Eingriff steht sowie mit einem neben diesem liegenden Kegelzahnrad (25), das an einer weiteren, mit einem Ende aus dem Zahnradgehäuse herausragenden Hilfswelle (26) befestigt ist und das in der Weise über dem am Rechorgan (6) befestigten Zahnrad (24) angeordnet ist, dass es sich frei von dem zuletzt genannten Zahnrad (24) dreht, wobei nach Wahl eines der aus dem Zahnradgehäuse (5) herausragenden Enden der Hilfswellen (22,26) mittels einer Zwischenwelle (27) mit einem Ende einer Welle (28) kuppelbar ist, die im Zahnradgehäuse (13) gelagert ist, das am Ende des Arms befestigt ist.

**Claims**

1. Implement for the treatment of crops lying on the ground including a frame and two rake assemblies (6, 14) provided with tines (7, 15) which may be driven in rotation about upwardly directed axes of rotation and by a gear housing (5, 13) connected to a supporting beam (1) of the frame, at least one of which is mounted near an end of the supporting beam (1) and is additionally pivotable with respect to the supporting beam (1) about an at least nearly vertical pivot pin (12), means additionally being provided by which the direction of rotation of at least one of the driven rake assemblies can be reversed and by which the implement may be switched between a first working position in which both rake assemblies lie next to one another transverse to the intended direction of movement in operation and may be driven so that the tines (7, 15) move rearwardly with respect to the direction of movement on the sides of the rake assemblies (6, 14) directed towards one another and a second working position in which the rake assemblies lie obliguely behind one another with respect to the direction of movement and may be driven in the same direction, characterised in that an end of an arm (11) is adjustably pivotally connected by means of an at least nearly vertical pivot pin (10) to the end of the supporting beam (1) extending in normal operation obliquely to the direction of movement which is directed away from a gear housing (5) fixedly arranged at the other end of the supporting beam (1) whilst the other gear housing (13) is pivotally coupled to the end of the arm (11) directed away from the pivot pin (10) by means of the first said at least nearly vertical pivot pin (12) to which an end of a coupling rod (16) is coupled which can be coupled at its other end in different positions with the supporting beam (1) for simultaneously locking the arm against rotation about its own pivot pin (10) and of the relevant gear housing (13) against rotation about its pivot pin (12) in both working positions.

2. Implement as claimed in claim 1, characterised in that the arm (11) and the gear housing (13) carried by the arm (11) may be locked by means of the coupling rod (16) in at least two positions in which the rake assemblies (6,14) lie at least nearly behind one another and at different distances from one another seen in a direction extending transverse to the intended direction of movement.

3. Implement as claimed in claim 1 or 2, characterised in that the coupling rod (16) is coupled by means of a horizontal pivot pin (17) to an end of the pivot pin (12) extending beyond the arm (11).

4. Implement as claimed in claim 3, characterised in that the pivot pin (12) encloses an angle of about 45° with the longitudinal axis of the coupling rod (16).

5. Implement as claimed in one of the preceding claims, characterised in that seen in the direction of movement (A) of the implement in operation the end of the supporting beam (1) directed away from the gear housing (5) firmly mounted on the supporting beam (1) lies in two different working positions at a greater distance from the gear housing (5) firmly mounted on the supporting beam (1) than the gear housing (13) of the adjustable rake assembly (14).

6. Implement as claimed in one of the preceding claims, characterised in that the centre line of the supporting beam (1) in the differing working positions encloses an angle of about 70° with the intended direction of movement (A) in normal operation.

7. Implement as claimed in one of the preceding claims, characterised in that the arm (11) in two working positions encloses an angle of at least nearly 50° with the longitudinal axis of the supporting beam (1).

8. Implement as claimed in one of the preceding claims, characterised in that the tines (15) of the adjustable rake assembly (14) are adjustable between two working positions by pivoting over 180° about an axis (38) at least nearly perpendicularly cutting or crossing the axis of rotation (12) of the rake assembly (14).

9. Implement as claimed in claim 8 in which the tines (15) are secured to carriers (36) which are rotatable with respect to the rake assembly (14) under the effect of centrifugal force about pivotal axes (35) against the effect of a coil spring (51) surrounding the pivotal axes, characterised in that the tines are supported by supports (42) which are rotatable with respect to the carriers (36) about the axes (38) and which have recesses (55, 56) for accommodating the ends of the coil springs (51) extending approximately radially with respect to the pivotal axes (35).

10. Implement as claimed in claim 9, characterised in that the carriers (36) carrying the tines (15) are operatively co-operating with abutments (149, 501) firmly mounted on the rake assembly (14) for limiting the pivotal movements of the carriers (36).

11. Implement as claimed in claim 10, characterised in that a carrier (36) is provided with a projecting portion (47) which extends through a support portion (34) secured to the rake assembly for the pivot pin (35).

12. Implement as claimed in one of the preceding claims, characterised in that the gear housing (5) firmly mounted on the supporting beam (1) is provided with an input shaft (19) for coupling by means of an auxiliary shaft to the power take-off shaft of a tractor or the like, which input shaft is coupled by means of toothed gearing (20, 21) to an auxiliary shaft (22) which extends at one end out of the gear housing and is provided at the other end with a bevelled gear (23) which is in engagement with a bevelled gear (24) situated beneath it and secured to the relevant rake assembly (6) and with a bevelled gear (25) situated next to it which is connected to a further auxiliary shaft (26) extending with one end out of the gear housing and which is disposed above the gear (24) secured to the rake assembly (6) in such a manner that it rotates independently of the last said gear (24), whereby one of the ends of the auxiliary shafts (22, 26) projecting out of the gear housing (5) may be selectively coupled by means of an intermediate shaft (27) to an end of a shaft (28) which is mounted in the gear housing (13) which is secured to the end of the arm.

## Revendications

1. Dispositif pour travailler des produits de récolte se trouvant sur le sol, ce dispositif comportant un châssis et deux organes de ratissage (6, 14), lesquels sont munis de dents (7, 15), sont capables de tourner autour d'axes de rotation dirigés vers le haut et peuvent être entraînés par un carter d'engrenage (5, 13) lié à une poutre porteuse (1) du châssis, au moins l'un de ces organes étant agencé près d'une extrémité de la poutre porteuse (1) et pouvant en outre être soumis à un pivotement, par rapport à la poutre porteuse (1), autour d'un axe de pivotement (12) au moins approximativement vertical, des moyens étant en outre prévus par lesquels le sens de rotation d'au moins l'un des organes de ratissage entraînés peut être inversé et par lesquels le dispositif peut être changé de position, à savoir entre une première position de travail dans laquelle les deux organes de ratissage se trouvent l'un à côté de l'autre, transversalement à la direction de déplacement envisagée pendant la marche, et peuvent être entraînés de façon telle que les dents (7, 15) se déplacent, sur les côtés mutuellement en regard des organes de ratissage (6, 14), vers l'arrière en considérant la direction du déplacement, et une deuxième position de travail dans laquelle les organes de ratissage, considérés dans la direction de déplacement, se trouvent obliquement l'un derrière l'autre et peuvent être entraînés dans la même direction, caractérisé en ce que la poutre porteuse (1) dirigée obliquement par rapport à la direction de déplacement lors de la marche normale présente, à son extrémité éloignée d'un carter d'engrenage (5) inamoviblement agencé à son autre extrémité, une extrémité d'un bras (11) qui est liée par articulation au moyen d'un axe de pivotement (10) au moins approximativement vertical, d'une manière permettant le réglage, tandis qu'à l'extrémité du bras (11) éloignée de l'axe de pivotement (10) l'autre carter d'engrenage (13) est couplé, de manière permettant le pivotement, au moyen du premier axe de pivotement (12) au moins approximativement vertical nommé, à lequel est couplé une première extrémité d'une tige de couplage (16), laquelle peut être couplée à la poutre porteuse (1) dans diverses positions, par son autre extrémité, dans les deux positions de travail, pour verrouiller simultanément le bras de manière à l'empêcher de tourner autour de son propre axe de pivotement (10) et le carter d'engrenage concerné (13) pour l'empêcher de tourner autour de son propre axe de pivotement (12).

2. Dispositif selon la revendication 1, caractérisé en ce que le bras (11) et le carter d'engrenage (13) porté par le bras (11) sont verrouillables, au moyen de la tige d'accouplement (16), dans au moins deux positions dans lesquelles les organes de ratissage (6, 14) se trouvent, en considérant une direction orientée transversalement à la direction de déplacement envisagée, au moins approximativement l'un derrière l'autre et à des distances différentes.

3. Dispositif selon la revendication 1 ou 2, caractérisé en ce que la tige d'accouplement (16) est couplée, au moyen d'un axe de pivotement horizontal (17), à une extrémité de l'axe de pivotement (12) dépassant au-delà du bras (11).

4. Dispositif selon la revendication 3, caractérisé en ce que l'axe de pivotement (12) forme, avec l'axe longitudinal de la tige d'accouplement (16), un angle d'environ 45°.

5. Dispositif selon l'une des revendications précédentes, caractérisé en ce qu'en considérant la direction du déplacement (A) du dispositif pendant la marche, l'extrémité de la poutre porteuse (1) éloignée du carter d'engrenage (5) inamoviblement agencé sur la poutre porteuse (1) se trouve, dans deux positions de travail différentes, à une plus grande distance du carter d'engrenage (5) inamoviblement agencé sur la poutre porteuse (1) que ne l'est le carter d'engrenage (13) de l'organe de ratissage réglable (14).

6. Dispositif selon l'une des revendications précédentes, caractérisé en ce qu'en marche normale la ligne médiane de la poutre porteuse (1) forme, dans les positions de travail différentes, un angle d'environ 70° avec la direction de déplacement envisagée (A).

7. Dispositif selon l'une des revendications précédentes, caractérisé en ce qu'en deux positions de travail le bras (11) forme un angle d'au moins 50° environ avec l'axe longitudinal de la poutre porteuse (1).

8. Dispositif selon l'une des revendications précédentes, caractérisé en ce que les dents (15) de l'organe de ratissage réglable (14) sont réglables entre deux positions de travail, par basculement sur 180°, autour d'un axe (38) coupant ou croisant au moins approximativement perpendiculairement l'axe de rotation (12) de l'organe de ratissage (14).

9. Dispositif selon la revendication 8, dans lequel les dents (15) sont fixées à des supports (36) qui, par rapport à l'organe de ratissage (14), peuvent être mus en rotation, sous l'action de la force centrifuge, autour d'axes de pivotement (35), contre l'action d'un ressort hélicoïdal (51) entourant les axes de pivotement, caractérisé en ce que les dents sont soutenues par des soutiens (42) qui, par rapport aux supports (36), peuvent tourner autour des axes (38) et qui présentent des évidements (55, 56) pour recevoir les extrémités (53) des ressorts hélicoïdaux (51), lesquelles sont dirigées à peu près radialement par rapport aux axes de pivotement (35).

10. Dispositif selon la revendication 9, caractérisé en ce que les supports (36) portant les dents (15) coopèrent avec des butées (149, 501) agencées à poste fixe sur l'organe de ratissage (14), pour limiter les mouvements de pivotement des supports (36).

11. Dispositif selon la revendication 10, caractérisé en ce qu'un support (36) est muni d'une partie débordante (47) qui s'étend au travers d'une pièce-support (34) pour l'axe de pivotement (35), fixée à l'organe de ratissage.

12. Dispositif selon l'une des revendications précédentes, caractérisé en ce que le carter d'engrenage (5) agencé à poste fixe sur la poutre porteuse (1) est muni d'un arbre d'entrée (19) que l'on couple à l'arbre de prise de force d'un tracteur ou analogue au moyen d'un arbre auxiliaire et qui est couplé, par une transmission à engrenage (20, 21), à un arbre auxiliaire (22) sortant du carter d'engrenage à une extrémité et muni, à l'autre extremité, d'une roue dentée, conique (23), laquelle se trouve en prise avec une roue dentée conique (24) se trouvant en dessous d'elle et fixée à l'organe de ratissage concerné (6), ainsi qu'avec une roue dentée conique (25), laquelle est située près de la précédente, est fixée à un autre arbre auxiliaire (26) sortant du carter d'engrenage par une extrémité et est agencée au-dessus de la roue dentée (24) fixée à l'organe de ratissage (6) de manière à tourner en étant dégagée de cette dernière roue dentée (24), l'une des extrémités des arbres auxiliaires (22, 26) sortant du carter d'engrenage (5) étant sélectivement apte à être couplée, au moyen d'un arbre intermédiaire (27), à une extrémité d'un arbre (28) qui est monté dans le carter d'engrenage (13) fixé à l'extrémité du bras.

FIG. 1.

FIG. 2.

FIG. 3.

FIG. 4.

FIG. 5.

FIG. 6.

FIG. 7.